# EUROPEAN PATENT SPECIFICATION

(11) **EP 0 784 890 B1**
(45) Date of publication and mention of the grant of the patent: **19.12.2001**
(21) Application number: 95934367.4
(22) Date of filing: 21.09.1995
(51) Int. Cl.: H04L 5/22, H04L 29/04

(54) **DEVICE FOR CONTROL OF THE CAPACITY OF A TELECOMMUNICATION NETWORK**
EINRICHTUNG ZUR KAPAZITÄTSREGELUNG EINES TELEKOMMUNIKATIONSNETZWERKES
DISPOSITIF PERMETTANT DE REGLER LA CAPACITE D'UN RESEAU DE TELECOMMUNICATIONS

(30) Priority: 04.10.1994 SE 9403343
(43) Date of publication of application: 23.07.1997
(73) Proprietor: TELIA AB, 123 86 Farsta (SE)
(72) Inventor: HAGSTRÖM, Bengt, S-125 33 Älvsjö (SE)
(74) Representative: Hopfgarten, Nils
(86) International application number: SE9501075
(87) International publication number: WO9610876

(56) References cited:
- EP-A- 0 593 843
- US-A- 4 965 790
- US-A- 5 293 376
- US-A- 5 408 465
- IEEE COMMUNICATIONS MAGAZINE, Volume 29, No. 10, October 1991, AUREL A. LAZAR et al., "Control of Resources in Broadband Networks With Quality of Service Guarantees", pages 66-73.
- IEEE JOURNAL ON SELECTED AREAS IN COMMUNICATIONS, Volume 9, No. 7, Sept. 1991, ROCH GUERIN et al., "Equivalent Capacity and Its Application to Bandwidth Allocation in High-Speed Networks", pages 968-981.
- IEEE JOURNAL ON SELECTED AREAS IN COMMUNICATIONS, Volume 8, No. 3, April 1990, DOMENICO FERRARI et al., "A Scheme for Real-Time Channel Establishment in Wide-Area Networks", pages 368-379.
- "ATM, Theory and Application", Section 23.4, D. McDYSAN et al.

## Description

### TECHNICAL FIELD

The present invention relates to a telecommunication network which is divided into a number of parts. The different parts can comprise different kinds of transmission media, for instance radio link connection, coaxial-connection, fiber optic connection etc. In future telecommunication networks ring networks will be established, at which different network structures will be interconnected. The transmission capacity in the different parts of the network varies.

### PRIOR ART

The capacity in the telecommunication networks of today is statically allotted. This implies that channels in the network are arranged according to an anticipated need. The implication of this is that the channel use is arranged independent of the need existing in each moment. Furthermore the channels are allotted determined traffic directions. The consequence of this is that a connection can have free channel space which is not possible to use because the traffic direction of the channels do not correspond to the wanted traffic direction. In the telecommunication networks of today the information is furthermore transmitted in a spiderweb-similar network. Through the document US 4 298 979 it is previously known to change channel allocation in interface modules by a request allocation process. A central network control unit registers all capacity and destination wishes which are possible to transmit to the network stations. The network stations are further connected to a central station which communicates with a satellite. The communication relates to transmission of data at fixed points of time and between fixed points.

### DESCRIPTION OF THE INVENTION

### TECNICAL PROBLEM

When transmitting information in a network there is a need for efficient use of the capacity in the different parts of the network. It is then a desire that the capacity can be changed depending on the existing need. Beside the possibility to change the capacity in the network there is also a need to decide the transmission direction for different capacities.

In the telecommunication networks which are built today different media will be used in the network. Accordingly all today known transmission media will be used, as well as future media which are not yet known. Depending on usable capacity also different paths to one and the same goal shall be possible to use depending on which path will give the wanted capacity. Further, network structures should be designed such that loss of capacity in parts of the network does not paralyse large parts of the network but alternative transmission paths should be used.

Furthermore there exists a need to allocate channels independent of each other. The possibility to change channel allocation while communication is going on with reference to the actual need is also desireable.

The present invention intends to solve the above mentioned problems.

### THE SOLUTION

These problemes are solved by a system according to claim 1. The present invention them relates to a system for control of the capacity in a telecommunication network. The telecommunication network, which preferably is a ring network, comprises a number of parts. The parts which can consist of different media, for instance coaxial connections fiber and radio links etc., have each a transmission capacity which is depending on the media. The transmission capacity in the different parts of the nework are known. Centrally in the network a control function is arranged which in each moment determines the capacity need in the different parts of the network. This control function is arranged to flexibly allocate the parts of the network that transmission capacity which is required for the moment. The control function is further arranged to communicate with channel creating devices in the telecommunication network and the channel creating devices are controlled by the control function.

The channel creating devices are arranged to establish channels for communication in different parts of the network. The creation of channels by the channel creating devices and traffic allocations in the channels are controlled by the control function. The channel creating devices are further arranged to control frequency separation mechanisms in the different parts of the telecommunication network. Furthermore the channel creating devices are preferably linked in the borders between different parts of the telecommunication network. The telecommunication network can be arranged in the form of a ring network.

### ADVANTAGES

The invention allows that the capacity of the network can be used in an efficient and optimal way. Further, the invention allows selection of the transmission direction depending on the existing need. The invention further allows a variable capacity in the different parts of the network. Possibility is further given to allocate channels, frequencies, depending on the existing need. Furthermore the channels can be reallocated between different parts of the network without these influencing each other.

Channel and traffic direction allocation can consequently be implemented in the different parts of the network, independent of each other. The ring network structure further gives a flexible use of the network by the possibility to reroute the traffic at network fault. The risk of interruption, which in conventional networks strikes many subscribers, is drastically reduced.

### DESCRIPTIONS OF FIGURES

Figure 1 shows a ring network where A, B, C, D and E shows different parts of the network.

Figure 2 shows in a corresponding way a network divided into parts with centrally arranged control device.

Figure 3 shows a part of the network with channel creating devices arranged in the border between the different parts of the network.

Figure 4 shows corresponding to Figure 3 with freqency separation mechanisms indicated.

### PREFERRED EMBODIMENT

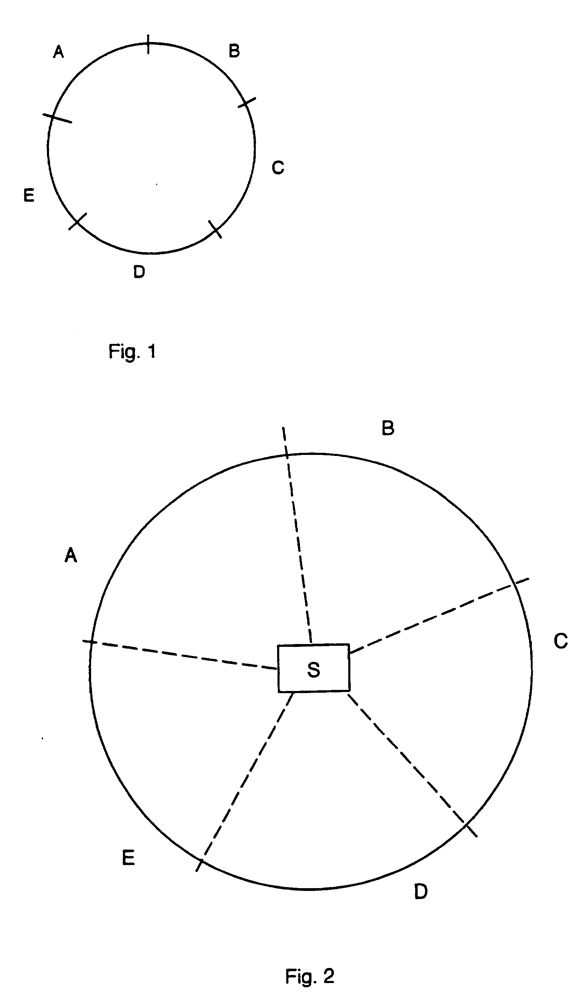

In the following the invention is described with reference to the figures. A telecommunication network according to Figure 1 is provided. The invention relates to a system is a telecommunication network for control of the different parts of the telecommunication network. The different parts consist for instance of coaxial connections, fiber connections, radio link connections etc. A channel creating device is arranged in the border between each part of the network. A centrally arranged control device is arranged to communicate with the channel creating devices. The control device gathers information from the different parts of the telecommunication network regarding the information transmission need. A decision is then taken by the control device regarding which channels shall be used and their allocation in the network. The channel creating devices receive the information and communicate with the frequency separation mechanism in the telecommunication network. The traffic direction in the network is further controlled. The telecommunication network is divided into a number of parts A, B, C etc. Each part of the telecommunication network has individual properties. Accordingly part A can correspond to a coaxial connection, part B to a fiber optical connection an C to a radio link connection etc. In the coaxial connection and fiber connection the transmission capacity is limited by the properties of respective media. The properties which then are to be observed are cable frequency limitations and the possiblity of division into a number of different channels. In part C, where a radio link tansmission is established, the transmission capacity is limited by the available frequency range in the ether. Further the frequency range is limited by the risk for disturbances from adjacent radio transmissions. The available frequency range in the ether can vary during the different parts of the 24 hours depending on the degree of use of other radio transmissions within the range where the radio link transmission can be disturbed, or disturb.

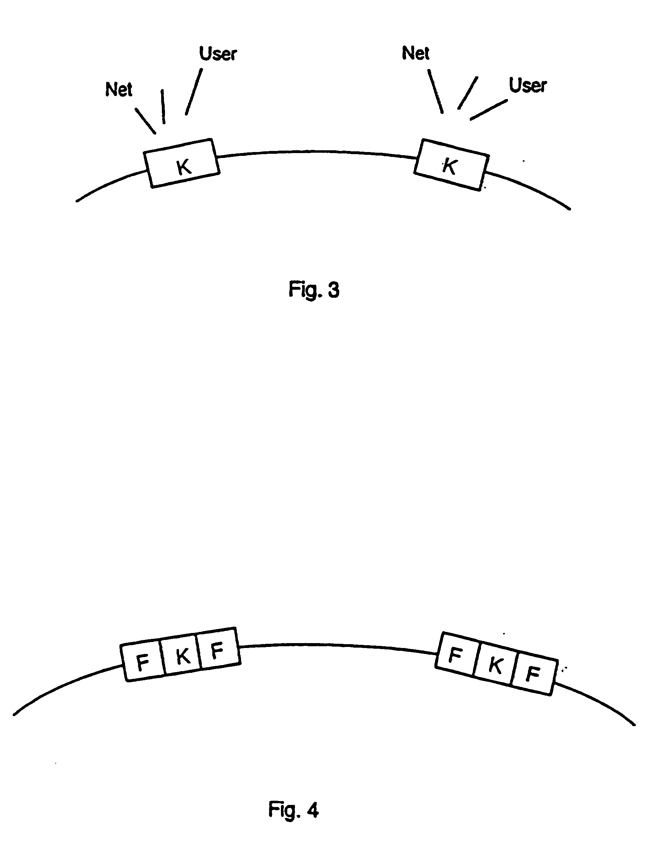

In the border between the different parts of the network channel creating devices are arranged. These channel creating devices are allowed to communicate on one hand with their own network, on the other with users in the network or with other networks. The changeover to other networks or users in the network can also be connected to the network parts in other points than the only here indicated. In Figure 3, where the channel creating devices have been indicated it has also been indicated in part of the network the possibility to connect other networks or users to the channel creating devices. In Figure 2, a central control device, S, has been indicated. The control device communicates with the different parts of the network and gathers information regarding information transmission needed. Further, the border between the area A and area B in Figure 2 is considered. In this interface, channel creating devices and frequency separation mechanisms according to Figure 4 are arranged. Further there are means arranged which put together information regarding traffic to and from area A respective area B in Figure 2, and traffic to and from other networks to and from users and respective. The information comprises among other things capacity needed and destination for the information in question. Further, information is transferred about limitations in the network such as free capacity of the different parts and/or faults in the network. The information is transferred via connections indicated by dested lines in Figure 2 to the control device. The control device then determines which channel space is needed for the information to be transmitted on the network. Further, the control device examines which possible routes exist with regard to the desired information space. The control device then decides which path an information is to be routed in the network. The control device also decides which frequencies and channels are to be allocated the information transmission in question in the different parts of the network. Information regarding the decided frequency allocations are transferred to the mentioned channel allocation devices in Figure 3. Information is also transferred whether the respective channel shall be one-way or bi-directional, and in case of one-way direction which direction shall be used in the network. The allocation of channels is in this way flexible in the different parts of the network, the need for each occasion thus being fulfilled.

The channel creating devices, K, are further arranged to control frequency separation mechanisms, F, in the network. The frequency separation mechanisms sort out the different in-coming and out-going channels in respective interface in the network. The channel creating devices and the frequency separation mechanisms operate in other respects in per se known ways. In the description it has been assumed that the channel creating devices are arranged between parts of the network which are different in their characters. The channel creating devices can as well be arranged within a network part where one and the same network structure exists on both sides of the channel creating devices.

The control device further receives information from the different parts of the network regarding limitation that may occur, for instance an interruption on a connection. In case of an interruption on a connection, for instance in part B, traffic which enters the border between part A and B will be routed over parts A E D C to users or networks which are connected to the border between parts B and C. In a corresponding way information which are to be routed from the border area between parts B and C to the area between parts A and B will be routed over the parts C D E A B. The control device will then see that available channels are used in an efficient way and that a maximum communication is possible without serious disturbances in the network.

The control device further communicates continuously with the different parts of the network and analyses the traffic needs in relation to available resources. Reallocation of channels are then made depending on the need. Further an already established connection can be routed to another path for making capacity and channels in the network, available. On such occasions the control device receives information from the different parts of the network. After analysis the control device decides possible reallocations of the network, when a reallocation of channels and/or change of traffic direction or route are needed. The control device transmits orders to the channel creating devices, which perform necessary changes including control orders to the frequency separation mechanisms. If the network is not capable of establishing all connections which are wanted on one occasion, the control device is arranged to otimize available channels for best possible use. The control device then takes into consideration the communication transmission which has priority before others. These communications given priority to are allocated communication space before other connections. Connections which have not been possible to establish are supervised by the control device which gives necessary information to the subscriber, via current channel creation device or other equipment in the telecommunication network. The subscriber can then be given possibility to wait for a later connection or is given the message that he/she should try again on a later occasion.

The invention is not restricted to the above described embodiment but can be subjected to modifications within the frame of the following claims and inventive idea.

## Claims

1. A system for the control of the capacity of a telecommunication network comprising a number of parts (A, B, C, D, E) with different known properties and transmission capacities, said system including channel creating devices (K) for establishing channels for communication in the different parts of the network, and at least one control device (S) arranged in the network to control said channel creating devices to establish communication channels in accordance with determined needs in different parts of the network, **characterized in that** said control device (S) is arranged centrally in the network and adapted to determine in each moment capacity needs in the different parts (A, B, C, D, E) of the network, to allocate the parts of the network and to separate connections, respectively, the transmission capacity required at each moment by controlling the creation of channels in the channel creating devices (K) and traffic direction in the created channels and by determining if the channels shall be one-way or bi-directional, and **in that** said channel creating devices (K) are adapted to control a frequency separation mechanism (F) in the different parts of the telecommunication network.

2. System according to claim 1, **characterized in that** the different parts (A, B, C, D, E) of the telecommunication network consist of different media, for instance coax, fibre, and/or radio link connection.

3. System according to claim 1 or 2, **characterized in that** the channel creating devices (K) are arranged in the border between different media.

4. System according to any of the previous claims, **characterized in that** the telecommunication network is a ring network.

5. System according to any of the previous claims, **characterized in that** the telecommunication network is adapted to include a number of interacting telecommunication networks including conventional telecommunication networks and/or ring networks.

## Patentansprüche

1. System zur Kapazitätsregelung eines Telekommunikationsnetzwerks mit einer Anzahl von Teilen (A,B,C,D,E) mit unterschiedlichen bekannten Eigenschaften und Übertragungskapazitäten, welches System Kanalaufbaueinheiten (K) umfasst zum Einrichten von Kanälen zur Kommunikation in den verschiedenen Teilen des Netzwerks und mindestens eine Steuereinheit (S) zum Steuern der Kanalaufbaueinheiten, um Kommunikationskanäle einzurichten in Übereinstimmung mit ermittelten Bedürfnissen in den verschiedenen Teilen des Netzwerks, **dadurch gekennzeichnet, dass** die Steuereinheit (S) zentral im Netzwerk angeordnet ist und dazu ausgebildet ist, den Teilen des Netzwerks die zu jedem Augenblick erforderliche Übertragungskapazität zuzuweisen durch Kontrollieren des Aufbaus von Kanälen in den Kanalaufbaueinheiten (K) und durch Verkehrslenkung in den aufgebauten Kanälen sowie durch Ermitteln, ob die Kanäle uni- oder bidirektional sein müssen, bzw. um die Verbindungen zu trennen, und dass ferner die Kanalaufbaueinheiten (K) ausgebildet sind zum Steuern eines Frequenztrennmechanismus (F) in den verschiedenen Teilen des Telekommunikationsnetzwerks.

2. System nach Anspruch 1, **dadurch gekennzeichnet, dass** die verschiedenen Teile (A,B,C,D,E) des Telekommunikationsnetzwerks aus verschiedenen Medien bestehen, zum Beispiel Koaxialkabel-, Glasfaser-, und/oder Funkverbindung.

3. System nach Anspruch 1 oder 2, **dadurch gekennzeichnet, dass** die Kanalaufbaueinheiten (K) an der Grenze zwischen verschiedenen Medien angeordnet sind.

4. System nach einem der vorangehenden Ansprüche, **dadurch gekennzeichnet, dass** das Telekommunikationsnetzwerk ein Ring-Netzwerk ist.

5. System nach einem der vorangehenden Ansprüche, **dadurch gekennzeichnet, dass** das Telekommunikationsnetzwerk ausgebildet ist, eine Anzahl von miteinander agierenden Telekommunikationsnetzwerken zu umfassen einschliessend konventionelle Telekommunikationsnetzwerke und/oder Ring-Netzwerke.

## Revendications

1. Système de contrôle de la capacité d'un réseau de télécommunications comprenant un certain nombre de parties (A, B, C, D, E) ayant des propriétés connues et des capacités de transmission différentes, ledit système comprenant des dispositifs de création de canaux (K) pour établir des canaux pour la communication outre les différentes parties du réseau, et au moins un dispositif de contrôle (S) disposé dans le réseau pour contrôler lesdits dispositifs de création de canaux pour établir des canaux de communication selon les besoins déterminés dans les différentes parties du réseau, **caractérisé en ce que** ledit dispositif de contrôle (S) est disposé d'une manière centrale dans le réseau et adapté de manière à déterminer à chaque moment les besoins en capacité dans les différentes parties (A, B, C, D, E) du réseau, à attribuer les parties du réseau et à séparer les connections, respectivement, la capacité de transmission requise à chaque moment en contrôlant la création de canaux dans les dispositifs de création de canaux (K) et en déterminant si les canaux seront unilatéraux ou bidirectionnels, et **en ce que** les dispositifs de création de canaux (K) sont adaptés pour contrôler un mécanisme de séparation de fréquence (F) dans les différentes parties du réseau de télécommunications.

2. Système selon la revendication 1, **caractérisé en ce que** les différentes parties (A, B, C, D, E) du réseau de télécommunications sont constituées de différents supports, par exemple des connections par liaison coaxiale, par fibre ou par liaison radio.

3. Système selon la revendication 1 ou 2,
**caractérisé en ce que** les dispositifs de création de canaux (K) sont disposés sur les bordures entre les différents supports.

4. Système selon l'une quelconque des revendications précédentes, **caractérisé en ce que** le réseau de télécommunications est un réseau en anneau.

5. Système selon l'une quelconque des revendications précédentes, **caractérisé en ce que** le réseau de télécommunications est adapté de manière à comprendre un certain nombre de réseaux de communications interactifs comprenant des réseaux de télécommunications classiques et/ou des réseaux en anneau.
